(19) Europäisches Patentamt
European Patent Office
Office européen des brevets

(11)  **EP 3 764 740 B1**

(12)  **EUROPEAN PATENT SPECIFICATION**

(45) Date of publication and mention
of the grant of the patent:
**23.11.2022  Bulletin 2022/47**

(51) International Patent Classification (IPC):
***H05B 6/06*** (2006.01)

(52) Cooperative Patent Classification (CPC):
**H05B 6/062**

(21) Application number: **19185902.4**

(22) Date of filing: **12.07.2019**

(54) **METHOD FOR CONTROLLING AN INDUCTION COOKING HOB**

VERFAHREN ZUR STEUERUNG EINES INDUKTIONSKOCHFELDS

PROCÉDÉ DE COMMANDE D'UNE PLAQUE DE CUISSON À INDUCTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**13.01.2021  Bulletin 2021/02**

(73) Proprietor: **ELECTROLUX APPLIANCES
AKTIEBOLAG
105 45 Stockholm (SE)**

(72) Inventors:
• **CHRISTIANSEN, Svend Erik
47100 Forli (IT)**
• **ANGELI, Fabio
47100 Forli (IT)**

• **MILANESI, Filippo
47122 Forli (IT)**
• **ZANGOLI, Massimo
47122 Forli (IT)**
• **NOSTRO, Massimo
47122 Forli (IT)**
• **VIROLI, Alex
47122 Forli (IT)**

(74) Representative: **Electrolux Group Patents
AB Electrolux
Group Patents
S:t Göransgatan 143
105 45 Stockholm (SE)**

(56) References cited:
**WO-A1-2014/037898      WO-A1-2018/209904
US-A1- 2014 014 647**

## Description

The present invention relates to a method for controlling an induction cooking hob. Further, the present invention relates to an induction cooking hob adapted for performing said method.

An induction cooking hob comprises one or more induction coils, at least one induction generator and a control unit. The induction generator provides the induction coils with alternating current. The control unit adjusts the working parameters of the induction generator. Usually, the control unit estimates the power transferred to the induction coils. Sometimes, the control unit determines frequencies for the induction coils in order to avoid acoustic noise. Moreover, the control unit may select working parameters for protecting the electric and electronic components. Further, the control unit may be provided for performing an operation mode for a very fast heating.

The document US 2014/0014647 A1 discloses an induction heating system including an induction heating coil operable to inductively heat a load with a magnetic field and a detector for detecting a current through the coil and providing a current signal representative for the current. The current signal is used to detect the presence of a load on the induction heating coil.

The document WO 2014/037898 A1 discloses a procedure wherein a heating coil is powered by a power converter connected to a mains power supply connection, and where the power converter is fitted with a suitable electronic controller which runs a current of a preset value through the heating coil. The controller identifies the system resonance frequency which corresponds to an optimum power supply for a container to be heated inductively.

WO 2018/209904 A1 discloses an electric cooker and a heating power control method and a device thereof. The control comprises obtaining heating power, detecting heating temperature of the cooker and determine whether the electric cooker enters an energy efficiency test state or not.

It is an object of the present invention to provide a method for controlling an induction cooking hob, which optimises the energy efficiency of said induction cooking hob.

The object is achieved by the method according to claim 1.

According to the present invention a method for controlling an induction cooking hob is provided, wherein said method comprises an operation mode for estimating the energy efficiency EE, and wherein said operation mode includes the steps of:

a) estimating the dissipated electric energy ED of the induction cooking hob,
b) comparing the dissipated electric energy ED with a threshold value EDthr for said dissipated electric energy ED,

c) maintaining the current working parameters of the induction cooking hob, if the dissipated electric energy ED is not bigger than the threshold value EDthr,
d) changing the current working parameters, if the dissipated electric energy ED is bigger than the threshold value EDthr, and
e) repeating the steps a) and b) and then c) or d), respectively, after a predetermined time period.

The operation mode for estimating the energy efficiency EE allows a dynamic adaption of the working conditions of the induction cooking hob, so that an optimised energy efficiency EE is obtained. The user can decide, if the energy efficiency EE is increased, while possibly the cooking speed is reduced and the cooking time is elongated.

Preferably, the operation mode for estimating the energy efficiency EE is activated or activatable by the user.

For example, the time period in step e) mentioned above is between five seconds and twenty seconds, preferably ten seconds.

According to the invention, the energy efficiency EE is given by the relationship

$$EE = EP / EI,$$

wherein EP is the electric energy transferred to a cooking pot arranged on the induction cooking hob and EI is the electric energy provided by the mains supply.

Further according to the invention, the electric energy EI provided by the mains supply

$$EI = EP + ED$$

may be composed of the electric energy EP transferred to the cooking pot and a dissipated electric energy ED.

The dissipated electric energy ED may be consumed by switching elements, induction coils and cooling fans. The switching elements are electronic switches, in particular power transistors, that are used to drive the induction coils with current at the desired frequency, for example in the range of 18 kHz up to 100 kHz.

Further according to the invention, the dissipated electric energy ED is estimated from detected parameters of the cooling fan, induction generator and induction coil.

In particular, the dissipated electric energy ED is estimated from the voltage, current and/or power of the cooling fan, induction generator and induction coil.

Moreover, the dissipated electric energy ED may be estimated from detected temperatures of the cooking pot, induction coils and/or electronic components.

Furthermore, the relationships between the dissipated electric energy ED and detectable working parameters are stored as software in a memory of a control unit of the induction cooking hob.

For example, the relationships between the dissipated electric energy ED and detectable working parameters of the induction cooking hob are stored as tables and/or mathematical functions.

In particular, the relationships between the dissipated electric energy ED and detectable working parameters of the induction cooking hob are obtained from experiments in a lab.

Further, the present invention relates to an induction cooking hob comprising a control unit configured to control the induction cooking hob by the method mentioned above.

At last, the present invention relates to a computer program product stored on a computer usable medium, comprising computer readable program means for causing a computer to perform the method described above.

Novel and inventive features of the present invention are set forth in the appended claims.

The present invention will be described in further detail with reference to the drawing, in which

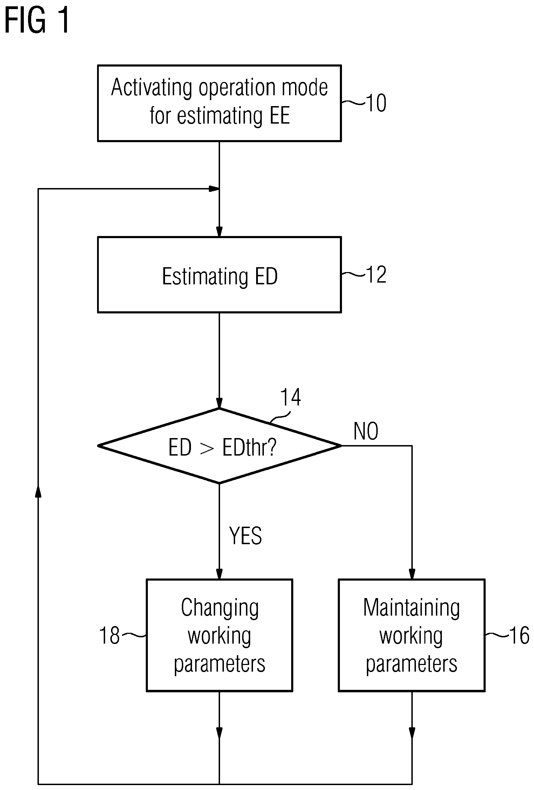

FIG 1    illustrates a schematic flow chart diagram of an operation mode for estimating the energy efficiency of an induction cooking hob according to a preferred embodiment of the present invention.

FIG 1 illustrates a schematic flow chart diagram of an operation mode for estimating the energy efficiency EE of an induction cooking hob according to a preferred embodiment of the present invention.

Preferably, the operation mode for estimating the energy efficiency EE is a part of a method for controlling the induction cooking hob. For example, said operation mode for estimating the energy efficiency EE is activated by a user of the induction cooking hob. The operation mode for estimating the energy efficiency EE as well as the method for controlling the induction cooking hob are controlled by at least one control unit of the induction cooking hob. For example, the operation mode for estimating the energy efficiency EE is supported by software of the control unit.

The energy efficiency EE is given by the relationship

$$EE = EP / EI,$$

wherein EP is the electric energy transferred to a cooking pot arranged on the induction cooking hob and EI is the electric energy provided by the mains supply. The value of the energy efficiency EE is between zero and one. It is desired that the energy efficiency EE is as large as possible.

The electric energy EI provided by the mains supply

$$EI = EP + ED$$

is composed of the electric energy EP transferred to the cooking pot and a dissipated electric energy ED. For example, the dissipated electric energy ED is consumed by switching elements, induction coils and cooling fans.

In a first step 10, the operation mode for estimating the energy efficiency EE is activated by the user of the induction cooking hob.

In a next step 12, the dissipated electric energy ED is estimated. In particular, electric energy ED is dissipated in the switching elements of the induction generator, by cooling fans and in the induction coils. The dissipated electric energy ED is indirectly estimated by detecting parameters like voltage, current and/or power of the cooling fan, induction generator and induction coil and temperatures of the cookware, induction coils and/or electronic components. The relationships between the dissipated electric energy ED and the detectable parameters are stored as in the software of the control unit, e. g. as tables or mathematical functions. Said relationships may be experimentally determined in a lab.

In a further step 14, the dissipated electric energy ED is compared with a threshold value EDthr for the dissipated electric energy ED. Said threshold value EDthr is defined in such a way that a certain desired level of energy efficiency EE is obtained.

If the dissipated electric energy ED is not bigger than the threshold value EDthr for said dissipated electric energy, then the control unit does not perform any action in step 16, i.e. the working parameters of the induction generator are maintained.

However, if the dissipated electric energy ED is bigger than the threshold value EDthr for said dissipated electric energy, then the control unit acts on one or more working parameters of the induction generator in step 18, i.e. the working parameters of the induction generator are changed. For example, the estimated power transfer to the induction coil is reduced.

At last, step 12 of estimating the dissipated electric energy ED and step 14 of comparing said dissipated electric energy ED with the threshold value EDthr are periodically repeated. For example, the periods between subsequent repetitions are between five seconds and twenty seconds, preferably about ten seconds. By this way, the threshold value EDthr for the dissipated electric energy ED is not exceeded for a longer time interval. At most, the threshold value EDthr for the dissipated electric energy ED is exceeded for a few seconds.

The operation mode for estimating the energy efficiency EE according to the present invention allows a dynamic adaption of the working conditions of the induction cooking hob. For example, the switching frequency of the induction generator or the power transfer to the cooking pot are dynamically changed and adapted.

The present invention allows an optimised energy efficiency EE, while possibly the cooking speed is reduced. The user can decide, if the energy efficiency EE is increased, while possibly the cooking time is elongated.

**List of reference numerals**

| | |
|---|---|
| 10 | step of activating the operation mode for estimating the energy efficiency EE |
| 12 | step of estimating the dissipated electric energy ED |
| 14 | step of comparing the dissipated electric energy ED with the threshold value EDthr |
| 16 | step of maintaining the current working parameters |
| 18 | step of changing the current working parameters |
| EI | electric energy provided by the mains |
| EP | electric energy transferred to the cooking pot |
| ED | dissipated electric energy |
| EDthr | threshold value for the dissipated electric energy |
| EE | energy efficiency |

**Claims**

1. A method for controlling an induction cooking hob, wherein said method comprises an operation mode for estimating the energy efficiency EE, wherein the energy efficiency EE is given by the relationship

$$EE = EP / EI,$$

wherein EP is the electric energy transferred to a cooking pot arranged on the induction cooking hob and EI is the electric energy provided by the mains supply and wherein the electric energy EI provided by the mains supply

$$EI = EP + ED$$

is composed of the electric energy EP transferred to the cooking pot and a dissipated electric energy ED, and wherein said operation mode includes the steps of:

a) estimating (12) the dissipated electric energy ED of the induction cooking hob,
b) comparing (14) the dissipated electric energy ED with a threshold value EDthr for said dissipated electric energy ED,
c) maintaining (16) the current working parameters of the induction cooking hob, if the dissipated electric energy ED is not bigger than the threshold value EDthr,
d) changing (18) the current working parameters in order to decrease the dissipated electric energy, if the dissipated electric energy ED is bigger than the threshold value EDthr, and
e) repeating the steps a) and b) and then c) or d), respectively, after a predetermined time period,

wherein the dissipated electric energy ED is estimated from detected parameters of the cooling fan, induction generator and induction coil.

2. The method according to claim 1,
**characterised in that**
the operation mode for estimating the energy efficiency EE is activated (10) or activatable by the user.

3. The method according to claim 1 or 2,
**characterised in that**
the time period in step e) of claim 1 is between five seconds and twenty seconds, preferably ten seconds.

4. The method according to any of the preceding claims,
**characterised in that**
the dissipated electric energy ED is consumed by switching elements, induction coils and cooling fans.

5. The method according to any of the preceding claims,
**characterised in that**
the dissipated electric energy ED is estimated from the voltage, current and/or power of the cooling fan, induction generator and induction coil.

6. The method according to any one of the preceding claims,
**characterised in that**
the dissipated electric energy ED is estimated from detected temperatures of the cooking pot, induction coils and/or electronic components.

7. The method according to any one of the preceding claims, **characterised in that**
the relationships between the dissipated electric energy ED and detectable working parameters are stored as software in a memory of a control unit of the induction cooking hob.

8. The method according to any one of the preceding claims, **characterised in that**
the relationships between the dissipated electric energy ED and detectable working parameters of the induction cooking hob are stored as tables and/or mathematical functions.

9. The method according to any one of the preceding claims, **characterised in that**
the relationships between the dissipated electric energy ED and detectable working parameters of the induction cooking hob are obtained from experiments in a lab.

10. An induction cooking hob,
**characterised in that**
the induction cooking hob comprises a control unit configured to control the induction cooking hob by a method according to any one of the preceding claims.

11. A computer program product stored on a computer usable medium, comprising computer readable program means for causing a computer to perform a method according to any one of the claims 1 to 9.

**Patentansprüche**

1. Verfahren zum Steuern eines Induktionskochfelds, wobei das Verfahren einen Arbeitsmodus zum Schätzen der Energieeffizienz EE umfasst, wobei die Energieeffizienz EE durch die Beziehung gegeben ist

$$EE = EP / EI,$$

wobei EP die zu einem auf dem Induktionskochfeld angeordneten Kochtopf übertragene elektrische Energie ist und EI die durch die Netzversorgung gelieferte elektrische Energie ist und wobei die durch die Netzversorgung gelieferte elektrische Energie EI

$$EI = EP + ED$$

aus der zu dem Kochtopf übertragenen elektrischen Energie EP und einer abgeführten elektrischen Energie ED zusammengesetzt ist und wobei der Arbeitsmodus die Schritte beinhaltet:

a) Schätzen (12) der abgeführten elektrischen Energie ED des Induktionskochfelds,
b) Vergleichen (14) der abgeführten elektrischen Energie ED mit einem Schwellwert EDthr für die abgeführte elektrische Energie ED,
c) Halten (16) der aktuellen Arbeitsparameter des Induktionskochfelds, falls die abgeführte elektrische Energie ED nicht größer ist als der Schwellwert EDthr,

d) Ändern (18) der aktuellen Arbeitsparameter, um die abgeführte elektrische Energie zu verringern, falls die abgeführte elektrische Energie ED größer ist als der Schwellwert EDthr, und
e) Wiederholen der Schritte a) und b) beziehungsweise dann c) oder d), nach einer vorbestimmten Zeitperiode,

wobei die abgeführte elektrische Energie ED aus detektierten Parametern des Kühlgebläses, eines Induktionsgenerators und einer Induktionsspule geschätzt wird.

2. Verfahren nach Anspruch 1,
**dadurch gekennzeichnet, dass**
der Arbeitsmodus zum Schätzen der Energieeffizienz EE durch den Nutzer aktiviert (10) wird oder aktivierbar ist.

3. Verfahren nach Anspruch 1 oder 2,
**dadurch gekennzeichnet, dass**
die Zeitperiode in Schritt e) von Anspruch 1 zwischen fünf Sekunden und zwanzig Sekunden liegt, bevorzugt zehn Sekunden.

4. Verfahren nach einem der vorhergehenden Ansprüche, **dadurch gekennzeichnet, dass**
die abgeführte elektrische Energie ED durch Schaltelemente, Induktionsspulen und Kühlgebläse verbraucht wird.

5. Verfahren nach einem der vorhergehenden Ansprüche, **dadurch gekennzeichnet, dass**
die abgeführte elektrische Energie ED aus der Spannung, dem Strom und/oder der Leistung des Kühlgebläses, des Induktionsgenerators und der Induktionsspule geschätzt wird.

6. Verfahren nach einem der vorhergehenden Ansprüche, **dadurch gekennzeichnet, dass**
die abgeführte elektrische Energie ED aus detektierten Temperaturen des Kochtopfs, der Induktionsspulen und/oder der Elektronikkomponenten geschätzt wird.

7. Verfahren nach einem der vorhergehenden Ansprüche, **dadurch gekennzeichnet, dass**
die Beziehungen zwischen der abgeführten elektrischen Energie ED und detektierbaren Arbeitsparametern als Software in einem Speicher einer Steuereinheit des Induktionskochfelds gespeichert werden.

8. Verfahren nach einem der vorhergehenden Ansprüche, **dadurch gekennzeichnet, dass**
die Beziehungen zwischen der abgeführten elektrischen Energie ED und detektierbaren Arbeitsparametern des Induktionskochfelds als Tabellen und/oder mathematische Funktionen gespeichert werden.

9. Verfahren nach einem der vorhergehenden Ansprüche, **dadurch gekennzeichnet, dass**
die Beziehungen zwischen der abgeführten elektrischen Energie ED und detektierbaren Arbeitsparametern des Induktionskochfelds aus Versuchen in einem Labor erhalten werden.

10. Induktionskochfeld,
**dadurch gekennzeichnet, dass**
das Induktionskochfeld eine Steuereinheit umfasst, die konfiguriert ist zum Steuern des Induktionskochfelds durch ein Verfahren nach einem der vorhergehenden Ansprüche.

11. Computerprogrammprodukt, das auf einem computernutzbaren Medium gespeichert ist, umfassend computerlesbare Programmmittel, um zu bewirken, dass ein Computer ein Verfahren nach einem der Ansprüche 1 bis 9 durchführt.

## Revendications

1. Procédé pour commander une plaque de cuisson à induction, où ledit procédé comprend un mode de fonctionnement pour estimer l'efficacité énergétique EE, où l'efficacité énergétique EE est donnée par la relation :

$$EE = EP / EI,$$

où EP est l'énergie électrique transférée à une casserole disposée sur la plaque de cuisson à induction et EI est l'énergie électrique fournie par l'alimentation secteur et où l'énergie électrique EI fournie par l'alimentation secteur

$$EI = EP + ED$$

est composée de l'énergie électrique EP transférée à la casserole et d'une énergie électrique dissipée ED, et où ledit mode de fonctionnement comprend les étapes suivantes :

  a) estimer (12) l'énergie électrique dissipée ED de la plaque de cuisson à induction,
  b) comparer (14) l'énergie électrique dissipée ED avec une valeur seuil EDthr pour ladite énergie électrique dissipée ED,
  c) maintenir (16) les paramètres de fonctionnement courants de la plaque de cuisson à induction si l'énergie électrique dissipée ED n'est pas supérieure à la valeur seuil EDthr,
  d) modifier (18) les paramètres de fonctionnement courants afin de diminuer l'énergie électrique dissipée, si l'énergie électrique dissipée ED est supérieure à la valeur seuil EDthr, et
  e) répéter les étapes a) et b), puis c) ou d), respectivement, après une période de temps prédéterminée, où l'énergie électrique dissipée ED est estimée à partir des paramètres détectés du ventilateur de refroidissement, du générateur d'induction et de la bobine d'induction.

2. Procédé selon la revendication 1, **caractérisé en ce que** :
le mode de fonctionnement pour estimer l'efficacité énergétique EE est activé (10) ou activable par l'utilisateur.

3. Procédé selon la revendication 1 ou la revendication 2, **caractérisé en ce que** :
la durée de l'étape e) de la revendication 1 est comprise entre cinq secondes et vingt secondes, de préférence dix secondes.

4. Procédé selon l'une quelconque des revendications précédentes, **caractérisé en ce que** :
l'énergie électrique dissipée ED est consommée par les éléments de commutation, les bobines d'induction et les ventilateurs de refroidissement.

5. Procédé selon l'une quelconque des revendications précédentes, **caractérisé en ce que** :
l'énergie électrique dissipée ED est estimée à partir de la tension, du courant et/ou de la puissance du ventilateur de refroidissement, du générateur d'induction et de la bobine d'induction.

6. Procédé selon l'une quelconque des revendications précédentes, **caractérisé en ce que** :
l'énergie électrique dissipée ED est estimée à partir des températures détectées de la casserole, des bobines d'induction et/ou des composants électroniques.

7. Procédé selon l'une quelconque des revendications précédentes, **caractérisé en ce que** :
les relations entre l'énergie électrique dissipée ED et les paramètres de fonctionnement détectables sont stockées sous forme de logiciel dans une mémoire d'une unité de commande de la plaque de cuisson à induction.

8. Procédé selon l'une quelconque des revendications précédentes, **caractérisé en ce que** :
les relations entre l'énergie électrique dissipée ED et les paramètres de fonctionnement détectables de la plaque de cuisson à induction sont stockées sous forme de tableaux et/ou de fonctions mathématiques.

9. Procédé selon l'une quelconque des revendications précédentes, **caractérisé en ce que** :
les relations entre l'énergie électrique dissipée ED et les paramètres de fonctionnement détectables de la plaque de cuisson à induction sont obtenues à partir d'expériences en laboratoire.

10. Plaque de cuisson à induction, **caractérisée en ce que** :
la plaque de cuisson à induction comprend une unité de commande configurée pour commander la plaque de cuisson à induction par un procédé selon l'une quelconque des revendications précédentes.

11. Produit programme informatique stocké sur un support utilisable par ordinateur, comprenant des moyens de programme lisibles par ordinateur pour amener un ordinateur à exécuter un procédé selon l'une quelconque des revendications 1 à 9.

# FIG 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20140014647 A1
- WO 2014037898 A1
- WO 2018209904 A1